# EUROPEAN PATENT APPLICATION

(11) **EP 2 312 453 A2**
(43) Date of publication of application: **20.04.2011**
(21) Application number: 10174918.2
(22) Date of filing: 01.09.2010
(51) Int. Cl.: G06F 13/42

(54) **Control apparatus and data processing system**

(30) Priority: 11.09.2009 JP 2009209919
(71) Applicant: Fujitsu Limited, Kawasaki-shi, Kanagawa 211-8588 (JP)
(72) Inventor: Furukoshi, Masanobu, Kawasaki-shi Kanagawa 211-8588 (JP)
(74) Representative: Ward, James Norman

(57) **Abstract**

A control apparatus connectable to a plurality of electronic units via a bus, the control apparatus controlling operations of the plurality of electronic units, the control apparatus includes a first storage section for storing an operating information used for operating each of the plurality of electronic units, a second storage section for storing an identifying information used for identifying each of the electronic units, a controller for controlling to receive a start notification of one of the electronic units, query the one of the electronic units about the identifying information, receive the identifying information from the one of the electronic units, compare the received identifying information with the stored identifying information in the second storage section, and query the one of the electronic units about an operating information when the received identifying information is different from the stored identifying information.

## Description

### FIELD

The embodiments discussed herein are related to a control apparatus and a data processing system.

### BACKGROUND

The demand for reducing capital investment and operation cost of recent information processing systems has increased. Facilities of the systems may be generally designed specifically to users or vendors. It may therefore be preferable to introduce the systems quickly and inexpensively.

Accordingly, a variety of standards for defining components such as chassis (shelves), cards, and small modules for adding functions to cards to establish a system in which modules from vendors are combined have been proposed. For example, the Peripheral Component Interconnect (PCI) Industrial Computer Manufacturers Group (PICMG) 3.0 Advanced Telecom Computing Architecture (Advanced TCA or ATCA, hereinafter referred to "ATCA") standard has been proposed as a standard suitable for communications carriers.

The ATCA standard standardizes chassis (shelves), cards (boards) mounted in chassis, etc., and boards having various functions may be combined to establish a data processing apparatus. In addition, the functionality of boards may be easily changed by adding a new ATCA board to a shelf of a product established using the ATCA standard or replacing an ATCA board mounted in a shelf with another ATCA board.

A device incorporating a shelf and cards standardized as above may require a unit for managing and controlling cards mounted in the shelf. The unit is called a shelf manager (shelf management apparatus). Each board is under the management of the shelf manager, and the shelf manager performs processing such as controlling the start of respective board (for example, blade) and monitoring the state of the board.

The shelf manager controls the start of all blades. When a blade is starting, the shelf manager collects information about the blade via an ATCA-based bus called the Intelligent Platform Management Bus (IPMB). Then, the shelf manager controls the start of the blade using the collected information. For example, the shelf manager compares power supplied from the chassis with power consumed by a blade. Therefore, the shelf manager does not allow the blade to start if the power consumed by the blade exceeds the upper limit of the supplied power. Alternatively, if the shelf manager does not have appropriate information about network connection ports (local area network (LAN) ports) of the blades, no network connection is permitted within the chassis.

Basically, managed blades are not capable of autonomously sending their information to the shelf manager. However, managed blades are only capable of transmitting information requested by the shelf manager. Note that managed blades autonomously transmit information reporting that the blades have started to the shelf manager.

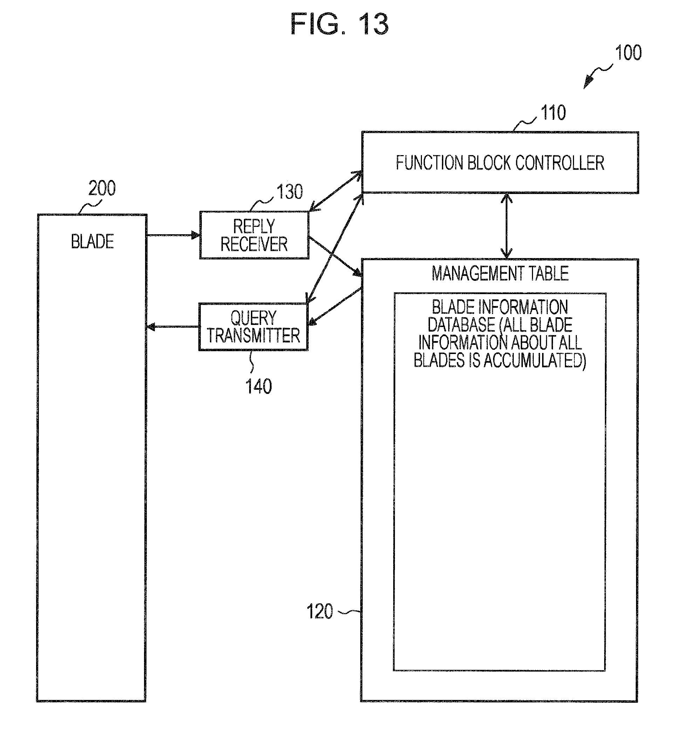

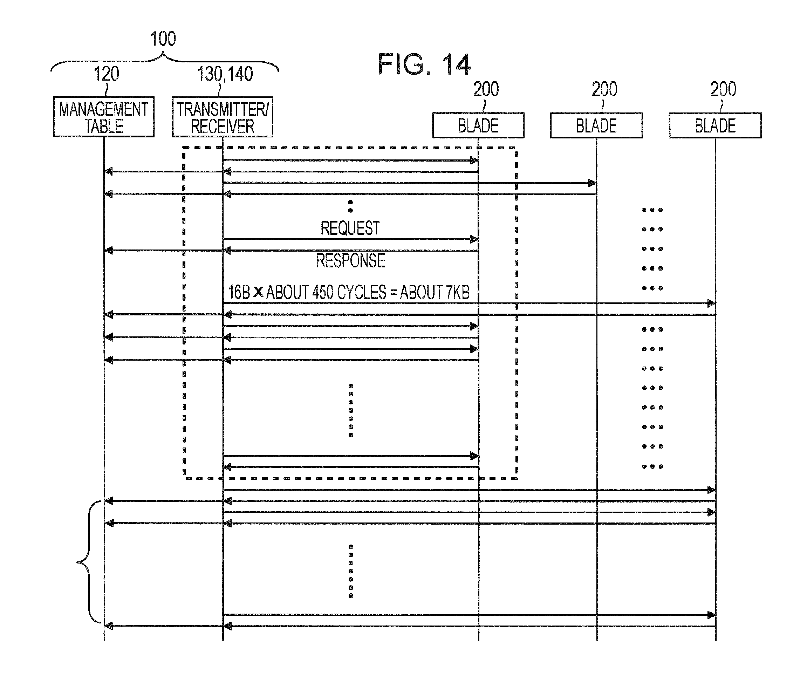

Therefore, the shelf manager is preferable to collect information about individual blades. FIGs. 13 and 14 are diagrams illustrating an existing information collection technology of a shelf manager. As illustrated in FIG. 13, a shelf manager 100 includes a management table 120 that stores a blade information database containing blade information about blades 200. The shelf manager 100 includes a query transmitter 140 that queries information about the blades 200. The shelf manager 100 includes a reply receiver 130 that receives replies from the blades 200. The shelf manager 100 includes a function block controller 110 that controls the management table 120. The shelf manager 100 includes the reply receiver 130, and the query transmitter 140.

As illustrated in a collection sequence diagram of FIG. 14, the query transmitter 140 queries the blades 200 for blade information via a bus. The reply receiver 130 receives replies (blade information) from the blades 200. The reply receiver 130 stores the received replies in the management table 120. That is, information data about a blade 200 that has started is received and stored without any control to establish the management table 120.

With the recent enhancement of the functionality of blades, the data amount of blade information has increased. Conventionally, existing methods support old types of blades because the data amount of blade information is small. However, new types of blades are not supported by such existing methods because of the increased data amount of blade information.

Specifically, with the increased load on the shelf manager that performs a blade information collection process because of the following reasons, the information collection process may be delayed. Therefore, a delay may occur in the blade start process.

Each blade has a different specification, and therefore has a different amount of blade information. While plurality types of blades exist, there is no specification on the speed at which the blades reply. Therefore, the speed at which blade information is transmitted as a reply differs from blade to blade. Since replies to an information transmission request from the shelf manager differ from blade to blade, it may be preferable to perform predetermined flow control. Thus, congestion may occur in the information collection process.

If the shelf manager has failed to receive blade information from a blade because of congestion in the information collection process, the shelf manager requests the blade to retransmit blade information. The retransmission request may trigger a vicious circle in which data is retransmitted from a large number of blades and the load on the bus increases. This may cause a start delay or a start failure of blades (a timeout may occur in the start process), leading to delays in the information collection process on the shelf manager side, for example, failure to completely read blade information or freezing of the start process.

The size of the shelf manager is fixed by the size of the chassis. Therefore, it is preferable to increase the speed of the processors or add more memory to increase the performance of the shelf manager.

[Patent Document 1] Japanese Laid-open Patent Publication No. 2006-009519
[Patent Document 2] Japanese Laid-open Patent Publication No. 2000-066978

### SUMMARY

Accordingly, it is an object in one aspect of the invention to provide a control apparatus and a data processing system so as to reduce the load of the process for collecting information about electronic units.

According to an aspect of an embodiment, a control apparatus connectable to a plurality of electronic units via a bus, the control apparatus controlling operations of the plurality of electronic units, the control apparatus includes a first storage section for storing an operating information used for operating each of the plurality of electronic units, a second storage section for storing an identifying information used for identifying each of the electronic units, a controller for controlling to receive a start notification of one of the electronic units, query the one of the electronic units about the identifying information, receive the identifying information from the one of the electronic units, compare the received identifying information with the stored identifying information in the second storage section, query the one of the electronic units about an operating information when the received identifying information is different from the stored identifying information, and store the received operating information in the first storage section.

### BRIEF DESCRIPTION OF DRAWINGS

FIG. 1 is a configuration diagram of a data processing system according to an embodiment;

FIG. 2 is a block diagram of a shelf management apparatus illustrated in FIG. 1;

FIG. 3 is a diagram illustrating blade information about a blade illustrated in FIGs. 1 and 2;

FIG. 4 is a diagram illustrating a partial information management table illustrated in FIG. 2;

FIG. 5 is a diagram illustrating a statistic pointer table illustrated in FIG. 2;

FIG. 6 is a diagram illustrating a blade information reference table illustrated in FIG. 2;

FIG. 7 is a diagram illustrating a blade information database illustrated in FIG. 2;

FIG. 8 is a flow diagram illustrating a data collection process of a shelf management apparatus according to an embodiment;

FIG. 9 is a diagram illustrating a collection sequence in the data collection process illustrated in FIG. 8;

FIG. 10 is a diagram illustrating a query data stream for querying partial information and a reply stream in the data collection process illustrated in FIG. 8;

FIG. 11 is a diagram illustrating a matching process in the data collection process illustrated in FIG. 8;

FIG. 12 is a diagram illustrating a query data stream for querying whole information and a reply stream in the data collection process illustrated in FIG. 8;

FIG. 13 is a block diagram of an existing shelf management apparatus; and

FIG. 14 is a diagram illustrating a blade information collection sequence of the existing shelf management apparatus.

### DESCRIPTION OF EMBODIMENTS

Examples of embodiments may be described hereinafter in the order of a control apparatus, a data processing system, a data collection process, and other embodiments. A shelf management apparatus disclosed in the following embodiments is one of examples of control apparatuses. However, a data processing system and a shelf management apparatus disclosed herein are not limited to those in the following embodiments.

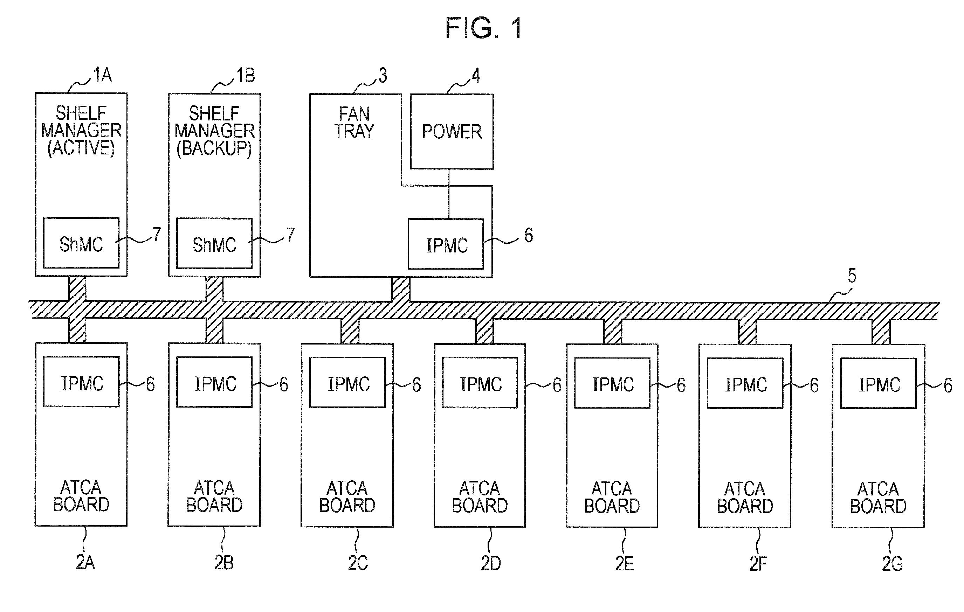

FIG. 1 is a configuration diagram of a data processing system according to an embodiment. The system illustrated in FIG. 1 is configured using a shelf manager, a shelf, and electronic units (also referred to as "blades") complying with the ATCA standard described above, by way of example.

The system illustrated in FIG. 1 includes a pair of shelf managers (shelf management apparatuses) 1A and 1B, multiple (in FIG. 1, seven) ATCA boards (hereinafter referred to as "blades") 2A to 2G, a cooling fan 3, a power supply 4, and a bus 5. The above devices are connected via the bus 5.

The shelf includes a subrack, a backplane, a front board, the cooling device (fan) 3, and the power supply 4. The backplane is composed of a circuit board on which connectors and the bus 5 are mounted. The backplane distributes the power supplied from the power supply 4. The shelf managers 1A and 1B and the blades 2A to 2B are mounted in the subrack, and are connected to the connectors of the backplane.

In the data processing system illustrated in FIG. 1, a pair of shelf managers 1A and 1B is provided and form a redundant system. For example, the shelf manager 1A may be active and the shelf manager 1B may be a backup. The shelf managers 1A and 1B are connected to the blades 2A to 2B via the bus (IPMB) 5 to transmit and receive information.

Each of the shelf managers 1A and 1B includes a shelf manager controller (ShMC) 7 configured to monitor and control the operation of the shelf components such as the blades 2A to 2G, the cooling fan 3, and the power supply 4. The shelf managers 1A and 1B search inventory information or sensor read information. The shelf managers 1A and 1B receive an event report or a failure notification from the blades 2A to 2G. The shelf managers 1A and 1B also control the start, reset, power supply, and cooling operations.

Each of the shelf manager controllers 7 serves as a distributed management controller that manages and monitors the operation of the devices in the system, such as the blades 2A to 2G, the cooling fan 3, and the power supply 4. Each of the shelf manager controllers 7 serves as a distributed management controller to manage and monitor system health. The shelf manager controller 7 may be configured using a microcomputer, a memory, and any other suitable device.

The blades 2A to 2G and the cooling fan 3 are Field Replacement Units (FRUs), and are replaceable in the field. Each of the units 2A to 2G and 3 includes an Intelligent Platform Management Controller (IPMC) 6, which may be configured using a microcomputer, a memory, and any other suitable device. The IPMCs 6 manage the power supply, cooling, and interconnect operations regarding hardware in the blades 2A to 2G and the cooling fan 3. The IPMCs 6 also monitor and log events.

The blades 2A to 2G have hardware (such as central processing units (CPUs)) for implementing the functions thereof, for example, communication processing, storage, monitoring processing, and data processing. The blades 2A to 2G are connected to other devices via connection lines (not illustrated).

That is, the system illustrated in FIG. 1 establishes a distributed management system. The distributed management system includes the shelf managers 1A, 1B, the FRUs 2A to 2G, and 3 including the management controllers 6 and 7. The shelf managers 1A, 1B, the FRUs 2A to 2G, and 3 are connected to the management bus 5 called the IPMB. The shelf managers 1A and 1B perform processing for collecting information about the blades 2A to 2G to manage and monitor the operation of the devices in the system to manage and monitor system health. The devices in the system may include the blades 2A to 2G, the cooling fan 3, and the power supply 4.

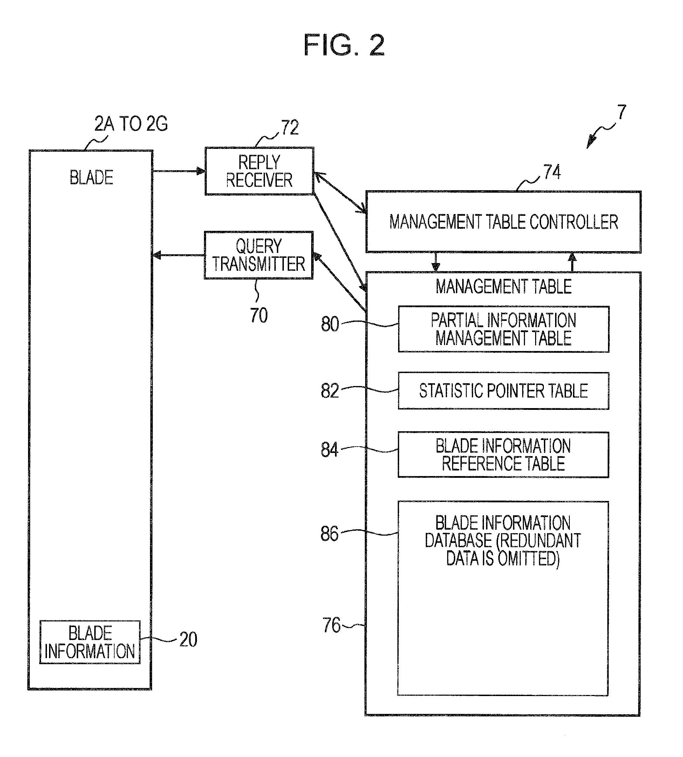

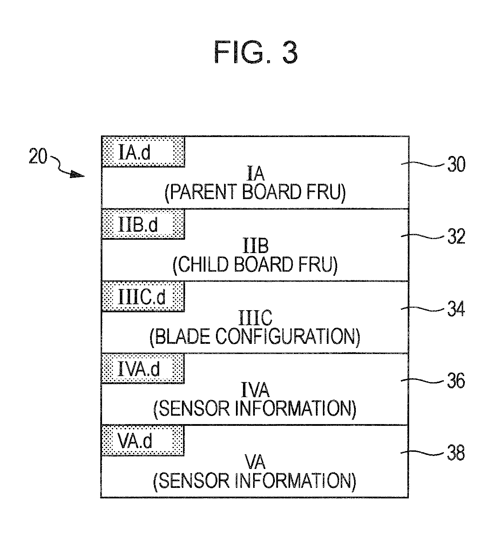

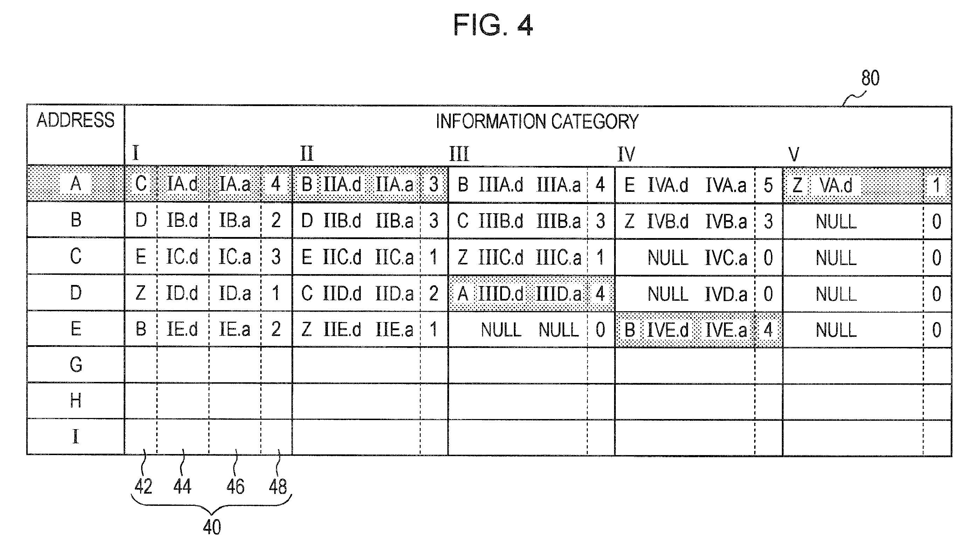

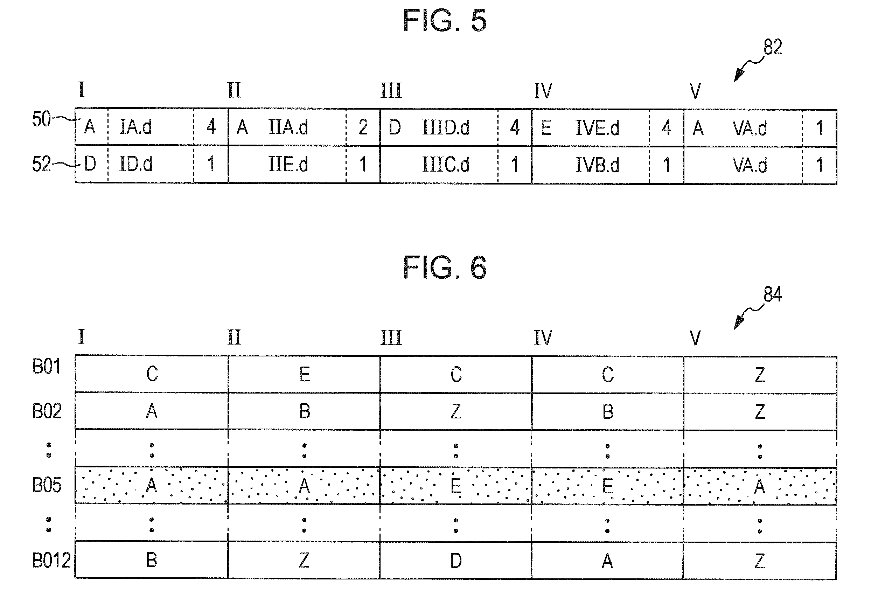

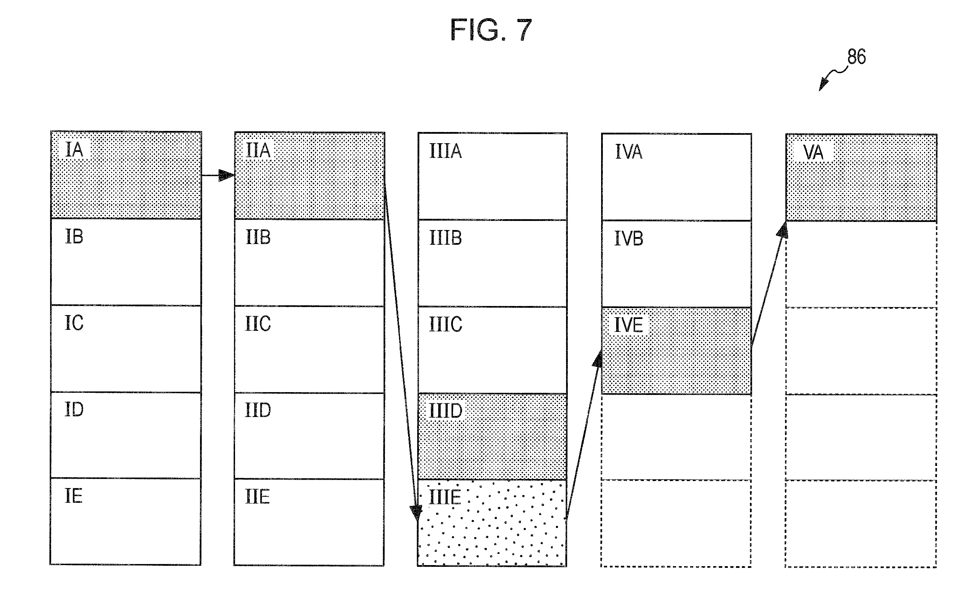

FIG. 2 is a block diagram of a shelf management apparatus according to an embodiment. FIG. 3 is a diagram illustrating blade information illustrated in FIG. 2. FIG. 4 is a diagram illustrating a partial information management table illustrated in FIG. 2. FIG. 5 is a diagram illustrating a statistic pointer table illustrated in FIG. 2. FIG. 6 is a diagram illustrating a blade information reference table illustrated in FIG. 2. FIG. 7 is a diagram illustrating a blade information database illustrated in FIG. 2.

FIG. 2 illustrates the configuration of the ShMCs 7 in the shelf management apparatuses 1A and 1B. Each of the ShMCs 7 in the shelf management apparatuses 1A and 1B includes a query transmitter 70 that requests the blades 2A to 2G to transmit blade information 20 (described below with reference to FIG. 3) via the bus 5. Each of the ShMCs 7 includes a receiver/analyzer 72 that receives data from the blades 2A to 2G via the bus 5 and that analyzes the received data. Each of the ShMCs 7 includes a management table 76, and a management table controller 74.

The management table 76 includes a partial information management table 80 (described below with reference to FIG. 4) that stores part of the blade information 20 (hereinafter referred to as "partial information") for respective type of the blade information 20. The management table 76 includes a blade information database 86 (described below with reference to FIG. 7) that stores blade information. The management table 76 includes a blade information reference table 84 (described below with reference to FIG. 6) that is used to refer to the blade information database 86 on a blade-by-blade basis from the partial information management table 80. The management table 76 includes a statistic pointer table 82 (described below with reference to FIG. 5). The statistic pointer table 82 totals the numbers of registrations of partial information registered in the management table 76 for respective type of partial information. The statistic pointer table 82 records the partial information for which the number of registrations is maximum. The statistic pointer table 82 records the partial information for which the number of registrations is minimum. The management table controller 74 performs control of the management table 76 including the management table 76 of the partial information management table 80.

The blade information 20, which is held in the IPMCs 6 in the blades 2A to 2G, may be described with reference to FIG. 3. The blade information 20 is divided into a plurality of types including self-inventory information (also referred to as "FRU information") 30 and 32, blade information 34, and sensor information (also referred to as "sensor data record (SDR)") 36 and 38.

The self-inventory information types 30 and 32 include information such as the serial number, version number, date of manufacture, and manufacturer of a blade. Since respective blade (ATCA board) may have a child board, in the example of FIG. 3, the self-inventory information type 30 represents self-inventory information about the parent board. Moreover, the self-inventory information type 32 represents self-inventory information about the child board. In FIG. 3, whole information of the self-inventory information types 30 and 32 is represented by IA and IIB. In FIG. 3, partial information (here, version number or checksum information) of the self-inventory information types 30 and 32 is represented by IA.d and IIB.d.

The blade configuration information type 34 indicates the configuration of respective blade. The blade configuration information type 34 includes information about the version number of firmware mounted in the blade, the number of LAN ports mounted in the blade. The blade configuration information type 34 includes information about a CPU mounted in the blade. The blade configuration information type 34 includes information of dual inline memory modules (DIMMs), and other suitable information. In FIG. 3, whole information of the blade configuration information type 34 is represented by IIIC. In FIG. 3, partial information (here, version number or checksum information) of the blade configuration information type 34 is represented by IIIC.d.

The sensor information types 36 and 38 relate to sensors mounted in respective blade. The sensor information types 36 and 38 include information about the details of the operation of an analog sensor mounted in each blade and information about the details of the operation of a digital sensor. The information about the details of the operation of the analog sensor may include voltage, current, temperature, and power. The information about the details of the operation of the digital sensor may detect the occurrence of the CPU failure or a DIMM failure.

Since each blade (ATCA board) may have a child board, in the example of FIG. 3, the sensor information type 36 represents sensor information about the parent board. Moreover, the sensor information type 38 represents sensor information about the child board. In FIG. 3, whole information of the sensor information types 36 and 38 is represented by IVA and VA. Moreover, partial information (here, version number of the sensors or checksum information) of the sensor information types 36 and 38 is represented by IVAd and VAd.

Partial information (also referred to as "aggregate data") of respective type according to the present embodiment is located at a specific position (beginning or end) of whole information. Partial information of respective type may have a size of about several bytes. Meanwhile, the overall size of the blade information 20 may be about 10 KB. Then, the overall size of the blade information 20 may be different depending on the type of the blade.

Next, the partial information management table 80 may be described with reference to FIG. 4. The partial information management table 80 contains, at memory addresses A to I, partial information sets 40 for respective of blade information types I to V. Each of the partial information sets 40 includes a next address 42. The next address 42 indicates the address of the partial information for which the number of registrations is the largest next to the number of registrations of the partial information corresponding to the partial information set 40. Each of the partial information sets 40 includes partial information 44, a pointer 46 corresponding to whole information in the blade information database 86, and a registration count 48.

In the partial information management table 80 illustrated in FIG. 4, the columns represent the blade information types I to V illustrated in FIG. 3. Then, the rows represent addresses assigned to different blade information.

For example, at address A corresponding to first blade information, the partial information (aggregate data) column in the type I indicates partial information IA.d, which is part of the blade information of the type I. The pointer to the whole information corresponding to the partial information IA.d is IA.a. The registration count is "4". The next address is address C. The partial information in the other types II to V is also obtained in a manner similar to the type I described above.

The partial information management table 80 stores partial information (aggregate data) that is part of blade information of respective type received as replies from blades. The partial information management table 80 stores the count of the number of times the same partial information has been received as replies from blades (the number of registrations). The partial information management table 80 stores the address of the partial information for which the number of registrations is the largest next to the partial information corresponding to the partial information. The partial information management table 80 is used to determine whether partial information included in a reply from a blade described below is the same as any of partial information included in replies already received from other blades. The partial information management table 80 also stores the numbers of replies (the numbers of registrations) in order to perform matching, starting from the large number of replies.

Next, the statistic pointer table 82 may be described with reference to FIG. 5. In the statistic pointer table 82, the numbers of registrations are totaled for respective type of blade information. The partial information for which the number of registrations is maximum. The partial information for which the number of registrations is minimum is recorded. The statistic pointer table 82 illustrated in FIG. 5 includes a maximum-number pointer table 50 and a minimum-number pointer table 52.

The maximum-number pointer table 50 stores, for respective of the blade information types I to V, the address of the partial information having the maximum registration count 48, i.e., the maximum number of replies (number of registrations), in the partial information management table 80. The maximum-number pointer table 50 stores the partial information having the maximum registration count 48. The maximum-number pointer table 50 stores the number of replies including the partial information (the number of registrations). The minimum-number pointer table 52 stores, for respective of the blade information types I to V, the address of the partial information having the minimum registration count 48, i.e., the minimum number of replies (number of registrations) in the partial information management table 80. The minimum-number pointer table 52 stores the partial information having the minimum registration count 48. The minimum-number pointer table 52 stores the number of replies including the partial information (the number of registrations).

The maximum-number pointer table 50 may be used, when a reply including partial information is received from a blade, to search the partial information management table 80 for the partial information for which the number of replies is maximum. The maximum-number pointer table 50 may be used in order to determine whether a match is found between the partial information included in the reply and the partial information for which the number of replies is maximum.

Next, the blade information reference table 84 may be described with reference to FIG. 6. The blade information reference table 84 stores, for respective of managed blades B01 to B12, reference pointers to blade information of respective of the types I to V in the blade information database 86.

Further, as illustrated in FIG. 7, the blade information database 86 stores, for respective of the blade information types I to V, whole information of blade information included in replies from blades. The blade information database 86 does not store all the blade information included in replies from blades. The blade information database 86 does not store redundant blade information. Blade information about respective blade is determined from correspondences between the blade information reference table 84 and the blade information database 86.

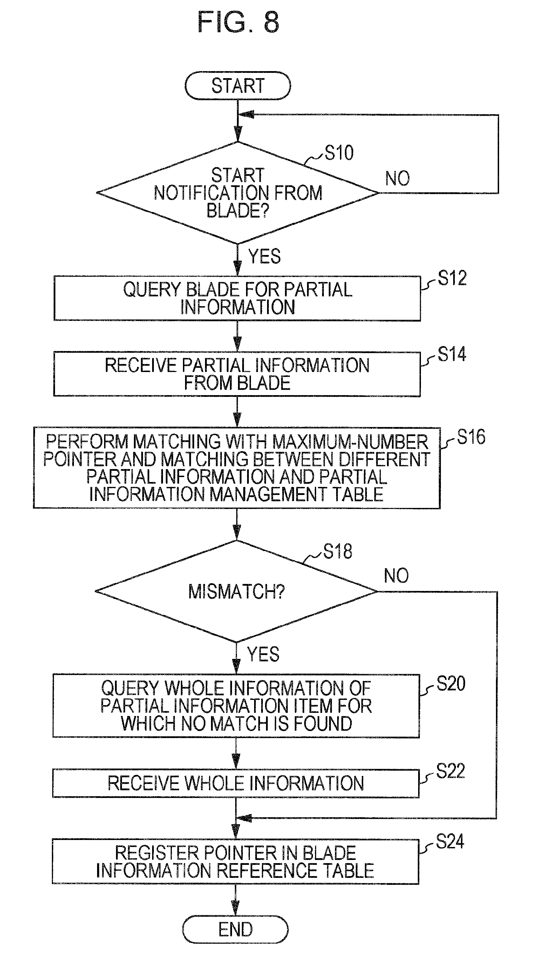

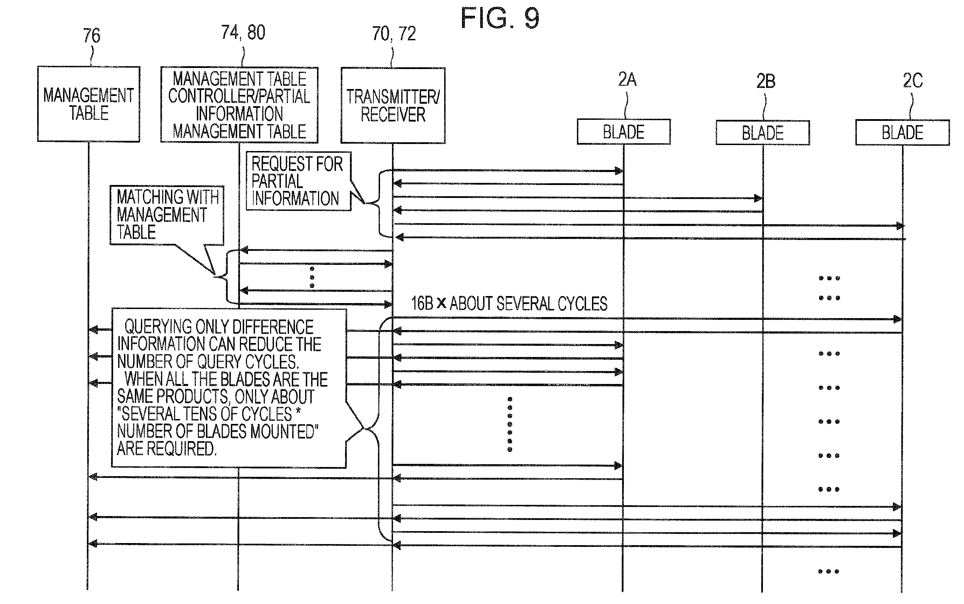

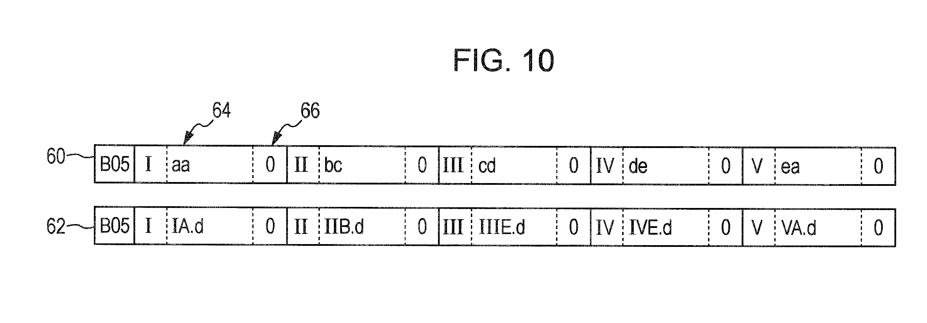

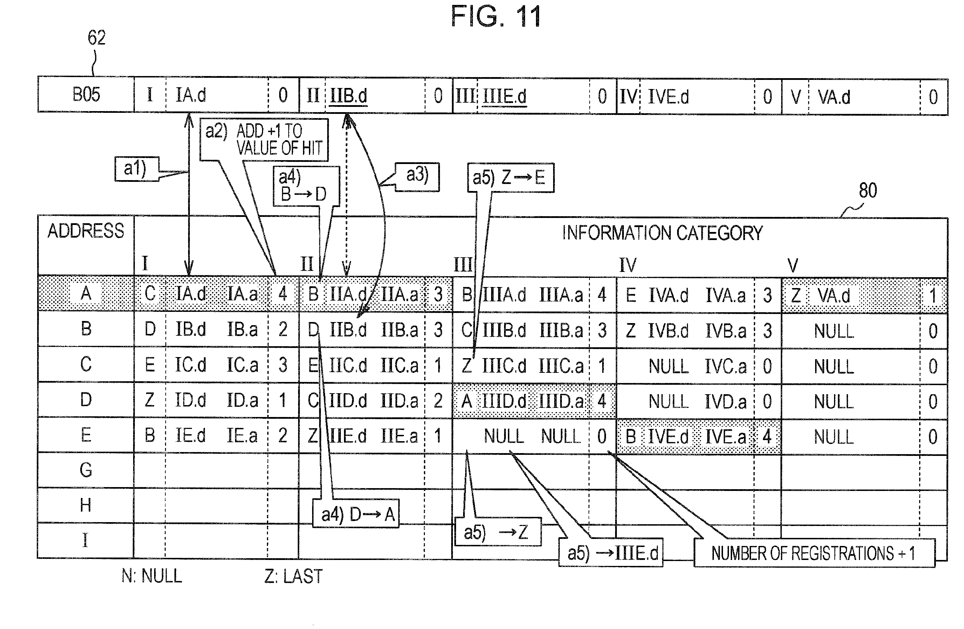

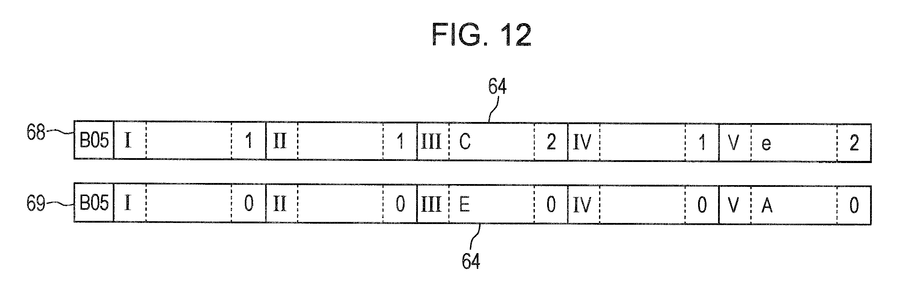

Next, a data collection process performed with the configurations illustrated in FIGs. 2 to 7 may be described. FIG. 8 is a flow diagram illustrating a data collection process of a shelf management apparatus according to an embodiment. FIG. 9 is a diagram illustrating a collection sequence in the data collection process. FIG. 10 is a diagram illustrating a data stream for querying partial information and a reply stream. FIG. 11 is a diagram illustrating a matching process illustrated in FIG. 8. FIG. 12 is a diagram illustrating a data stream for querying whole information and a reply stream.

The process illustrated in FIG. 8 may now be described with reference to FIGs. 9 to 12.

At step 10, the receiver/analyzer 72 of the ShMC 7 in the shelf management apparatus 1A monitors incoming start messages from the blades 2A to 2G via the bus 5. Upon receipt of a start message from one of the blades 2A to 2G, the receiver/analyzer 72 detects the start of the blade. In FIG. 9, the detection of the start is not illustrated because the sequence illustrated in FIG. 9 is a sequence performed after the detection of the start.

At step 12, upon detection of the start of a blade, as indicated by a request for partial information illustrated in FIG. 9, the query transmitter 70 of the ShMC 7 transmits a data stream for querying partial information to be matched with the partial information in the partial information management table 80 to the blade that has started. FIG. 10 illustrates a query data stream 60 for querying partial information which is transmitted when the blade B05 (see FIG. 6) has started. Specifically, a query message including an address 64 of partial information in respective of the blade information types I to V and a query type 66 for querying a format is transmitted to the blade B05 that has started.

In FIG. 10, for the blade information type I, address "aa" of the partial information in the blade information type I and query type "0" (request for partial information) are set to the blade B05. Here, query type "0" represents a partial information request, query type "1" represents non-required collection. Then, query type "2" represents a whole blade information request. The above query types are provided for the purpose of unifying the format of the query message with the format of a query message for querying whole information illustrated in FIG. 12.

At step 14, the IPMC 6 in the blade B05 receives the query message 60 sent via the bus 5. The IPMC 6 analyzes the query message 60 to create a reply data stream 62. The IPMC 6 transmits the reply data stream 62 to the bus 5. The receiver/analyzer 72 of the ShMC 7 in the shelf management apparatus 1A receives the reply data stream 62 from the blade B05. The receiver/analyzer 72 sends the reply data stream 62 to the management table controller 74. In FIG. 10, the reply data stream 62 may be a data stream having address columns 64 of the blade information types I to V in which partial information (version number or checksum information) at the corresponding addresses is set. For example, for the blade information type I, partial information IA.d corresponding to the address "aa" of the partial information, and query type "0" are set to the blade B05.

At step 16, the management table controller 74, then, searches the partial information management table 80 using the addresses in the maximum-number pointer table 50 in the statistic pointer table 82 to obtain the partial information for which the numbers of registrations is maximum. The management table controller 74 matches the partial information in the reply data stream 62 with the obtained partial information in order from the information type I.

Then, the management table controller 74 determines, for respective information type, whether the partial information included in the reply data stream 62 matches the partial information registered as the partial information for which the numbers of registrations is maximum in the maximum-number pointer table 50. When a match is found, the number of registrations of the partial information for which a match is found is incremented by "1" in the partial information management table 80.

When no match is found between the partial information included in the reply data stream 62 and the partial information for which the number of registrations is maximum, that is, if partial information different from any of the partial information included in the reply data stream 62 has been detected, the partial information corresponding to the address indicated in the next address contained in the column of the information type in which no match is found in the partial information management table 80 is matched with the partial information included in the reply data stream 62.

The partial information included in the reply data stream illustrated in FIG. 10 is compared with the partial information set for which the numbers of registrations are maximum in the maximum-number pointer table 50 illustrated in FIG. 5. Thus, it is detected that the partial information in the blade information types II, III, and V is different from the partial information registered in the maximum-number pointer table 50. Then, as illustrated in FIG. 11, for respective of the types I and IV in which the partial information matches the partial information registered in the maximum-number pointer table 50, the management table controller 74 increments the number of registrations of the corresponding information in the partial information management table 80 by "1".

For respective of the types II, III, and V in which the partial information does not match the partial information registered in the maximum-number pointer table 50, the partial information included in the reply data stream 62 is sequentially matched with the partial information corresponding to the address indicated in the next address contained in the column of the corresponding information type in the partial information management table 80. In the example of FIG. 11, a match is found for the information type II. Thus, the number of registrations of the partial information in the type II in the partial information management table 80 is incremented by "1". If the order of the numbers of registrations of the partial information in the partial information management table 80 is changed by incrementing the number of registrations, the next addresses and the maximum-number pointer table 50 are updated as necessary.

Further, for respective of the types III and V in which no partial information that matches the corresponding partial information included in the reply data stream 62 is registered in the partial information management table 80 (no match is found), the partial information that is not registered and the number of registrations are additionally registered in the partial information management table 80.

At step 18, the management table controller 74 determines whether there is a type in which no match is found.

At step 20, when it is determined that there is a type in which no match is found, the management table controller 74 causes a query data stream 68 for querying whole information as a reply only in the type in which no match is found to be transmitted from the query transmitter 70 of the ShMC 7 to the blade that has started. In FIG. 12, for the blade information types III and V in which no match is found, addresses "C" and "e" of the whole information, and query type "2" (request for whole information) are set to the blade B05. For the other types I, II, and IV, the query type "1" (non-required collection) is set because of no need to query the blade B05.

At step 22, the IPMC 6 in the blade B05 receives the query message 68 sent via the bus 5. The IPMC 6 analyzes the query message 68 to create a reply data stream 69. The IPMC 6 transmits the reply data stream 69 to the bus 5. The receiver/analyzer 72 of the ShMC 7 in the shelf management apparatus 1A receives the reply data stream 69. The receiver/analyzer 72 sends the reply data stream 69 to the management table controller 74. In FIG. 12, the reply data stream 69 may be a data stream having address columns 64 of the blade information types III and V in which whole information at the corresponding addresses is set. For example, for the blade information type III, whole information IIIE corresponding to the address "C" of the whole information and query type "0" are set to the blade B05.

At step 24, when there is no blade information that does not match the partial information registered in the maximum-number pointer table 50, the management table controller 74 registers in the blade information reference table 84 illustrated in FIG. 6 pointers to the blade information of the respective types in the blade information database 86 for the corresponding blade. When there is a blade information that does not match the partial information registered in the maximum-number pointer table 50, the management table controller 74 registers in the blade information database 86 illustrated in FIG. 7 the whole information about the type of received blade information. The management table controller 74 also registers in the blade information reference table 84 illustrated in FIG. 6 pointers to the blade information of the respective types in the blade information database 86 for the corresponding blade. Then, the data collection process ends.

The minimum-number pointer table 52 illustrated in FIG. 5 may be used, when a blade is removed from the shelf, to search for blade information about the blade to delete the blade information about the blade from the partial information management table 80, the blade information reference table 84, and the blade information database 86.

FIG. 11 illustrates the operation when, upon receipt of a reply data stream 62 illustrated in FIG. 11 from the blade B05, the partial information management table 80 is in the state illustrated in FIG. 4. In FIG. 11, partial information in the blade information type I matches partial information (indicated by a hatched portion) at address A having the maximum number of replies, "4", in the blade information type I in the partial information management table 80 (a1). Then, the number of replies at the address at which a match is found is incremented by "1" (a2).

Further, the partial information in the blade information type II matches the partial information at address B in the blade information type II in the partial information management table 80 (a3). Then, the number of replies at the address B at which a match is found is incremented by "1". Then, the next address of the address A is changed from "B" to "D". Then, the next address of the address B is changed from "D" to "A" (a4).

Further, the partial information in the blade information type III does not match any of the partial information in the blade information type III stored in the partial information management table 80. Thus, partial information IIIE.d in the blade information type III is registered at the most significant address E of the blade information type III, which is not registered, in the partial information management table 80. Then, the number of replies is incremented by "1". Then, the next address of the address C corresponding to the minimum number of replies is set from "Z" to "E". Then, "Z" is set in the next address of the address E (a5). Processing similar to that described above is performed on the partial information in the blade information types IV and V.

A process operation for referring to collected blade information may now be described. The blade information reference table 84 illustrated in FIG. 6 stores, for respective of the managed blades B01 to B12, reference pointers to the respective blade information types I to V in the blade information database 86. As illustrated in FIG. 7, the blade information database 86 stores, for respective of the blade information types I to V, whole information of blade information included in a reply from a blade.

That is, the blade information about respective blade may be determined from correspondences between the blade information reference table 84 and the blade information database 86. In the example of FIG. 6, the blade information reference table 84 contains, with respect to the blade B05, the reference pointers A, A, E, E, and A to the blade information database 86 for the types I to V. Thus, as in the example of FIG. 7, the blade information types IA, IIA, IIIE, IVE, and VA in the types I to V in the blade information database 86, which are indicated by hatched portions, are referred to. Then, desired blade information may be obtained.

In this manner, a shelf manager includes a database of information about managed blades (a plurality of types of information exist). When information about managed blades is collected, the data of part of information about respective of the blades is used for matching with the content of the database (partial information management table). Omission of the extraction of redundant information results in reduced process load.

Further, the database (partial information management table) may be dynamically updated and optimized in accordance with collected blade information. Then, the hit rate for matching of blade information may be increased, resulting in a more efficient reduction of load.

Further, a maximum-number pointer table is provided. Then, different blade information is extracted before matching with the database (partial information management table) is performed. This may prevent redundant matching in the database and may reduce the start time.

In this manner, matching of partial information may omit the extraction of redundant whole information, and may reduce the number of accesses to blades. For example, when the same product is applied to all blades, the present embodiment may require only "several tens of cycles multiplying the number of blades mounted", which may be reduced over conventional systems which may require "450 cycles multiplying the number of blades mounted".

Further, for example, when the apparatus configuration is greatly changed such as when a different type of blade is mounted, the management table may be autonomously updated in accordance with the apparatus configuration without increasing the amount of information collected.

In addition, the integration of redundant portions of blade information may reduce the capacity of the blade information database. For example, when the same product is applied to all blades, the present embodiment may require a blade information database having a capacity of only "1 blade (7 KB) + α (partial information management table, statistic pointer table, blade information reference table)", which may be reduced over conventional blade information databases which may require a capacity of "about 7 KB multiplying the number of blades mounted".

While the foregoing embodiment has been described in the context of an ATCA data processing system, the present embodiment may also be applied to products complying with other standards that define shelves or boards. A configuration having no statistic pointer table may also be employed. The term "blade" as used herein refers to the so-called electronic unit incorporating an electronic circuit, and a desired electronic unit may be employed. Furthermore, partial information and/or whole information is not limited to the partial information and/or the whole information in the embodiment.

A shelf management apparatus includes an internal database of information about managed blades (electronic units). When information about managed blades is collected, the data of part of information about respective of the blades is used for matching with the content of a partial information management table. Omission of the extraction of redundant information may reduce the process load.

All examples and conditional language recited herein are intended for pedagogical purposes to aid the reader in understanding the embodiment and the concepts contributed by the inventor to furthering the art, and are to be construed as being without limitation to such specifically recited examples and conditions, nor does the organization of such examples in the specification relate to a illustrating of the superiority and inferiority of the embodiment. Although the embodiments of the present invention have been described in detail, it should be understood that the various changes, substitutions, and alterations could be made hereto without departing from the spirit and scope of the invention.

## Claims

1. A control apparatus connectable to a plurality of electronic units via a bus, the control apparatus controlling operations of the plurality of electronic units, the control apparatus comprising:
a first storage section for storing an operating information used for operating each of the plurality of electronic units;
a second storage section for storing an identifying information used for identifying each of the electronic units;
a controller for controlling to receive a start notification of one of the electronic units,
query the one of the electronic units about the identifying information,
receive the identifying information from the one of the electronic units,
compare the received identifying information with the stored identifying information in the second storage section,
query the one of the electronic units about an operating information when the received identifying information is different from the stored identifying information,
receive the operating information from the electronic unit, and
store the received operating information in the first storage section.

2. The control apparatus according to claim 1, wherein
the second storage section stores the identifying information corresponding to the each type of the operating information, and
the controller controls to query the one of the electronic units about each type of the identifying information, receive the plurality of the each type of the identifying information from the one of the electronic units, compare the plurality of the each type of the received identifying information with the stored identifying information, query the one of the electronic units about a type of the operating information different from the type of the information, receive the operating information from the electronic unit, and store the received operating information in the first storage section.

3. The control apparatus according to claim 1 or 2, wherein
the second storage section stores the identifying information and a number of registrations corresponding to each of the identifying information, and
the controller controls to compare the received identifying information with the stored identifying information in order of a type including a large number of registrations.

4. The control apparatus according to claim 3, wherein
the controller controls to update the number of registrations corresponding to the type of the stored identifying information when the received identifying information matches the stored identifying information.

5. The control apparatus according to any preceding claim, further comprising
a reference table indicating the stored operating information in the first storage section corresponding to each of the electronic units.

6. The control apparatus according to claim 3, 4 or 5, further comprising
a maximum pointer table for storing the identifying information including a maximum registration number indicating the largest registration number of the identifying information in the second storage section, and
wherein the controller controls to compare the received identifying information with the stored identifying information in the maximum pointer table, and compare the received identifying information with the stored identifying information when the received identifying information is different from the stored identifying information in the second storage section.

7. The control apparatus according to any preceding claim, wherein
the identifying information includes a part of the operating information.

8. The control apparatus according to claim 7, wherein
the part of the operating information includes a version number or a checksum information.

9. The control apparatus according to any preceding claim, wherein
the plurality of electronic units includes at least a blade used for a blade server.

10. A data processing system comprising:
a plurality of electronic units; and
a control apparatus according to any of claims 1 to 9.
